# EUROPÄISCHE PATENTSCHRIFT

(11) **EP 0 889 807 B1**
(45) Veröffentlichungstag und Bekanntmachung des Hinweises auf die Patenterteilung: **28.08.2002**
(21) Anmeldenummer: 97903241.4
(22) Anmeldetag: 10.02.1997
(51) Int. Cl.: B60R 21/22

(54) **ANORDNUNG EINES AUFBLASBAREN SEITLICHEN KOPFSCHUTZSYSTEMES IN EINEM KRAFTFAHRZEUG**
ARRANGEMENT OF AN INFLATABLE HEAD-PROTECTION SYSTEM IN A MOTOR VEHICLE
CONFIGURATION D'UN SYSTEME LATERAL GONFLABLE DE PROTECTION DE LA TETE DANS UNE AUTOMOBILE

(30) Priorität: 27.03.1996 DE 19612229
(43) Veröffentlichungstag der Anmeldung: 13.01.1999
(73) Patentinhaber: Bayerische Motoren Werke Aktiengesellschaft, 80788 München (DE)
(72) Erfinder: STAVERMANN, Joerg, D-80331 München (DE); FALLMANN, Andreas, D-80757 Karlsfeld (DE)
(86) Internationale Anmeldenummer: EP9700573
(87) Internationale Veröffentlichungsnummer: WO97035747

(56) Entgegenhaltungen:
- EP-A- 0 694 444
- DE-U- 29 605 897
- DE-U- 29 610 920
- GB-A- 2 191 450
- GB-A- 2 261 636
- US-A- 4 966 388
- PATENT ABSTRACTS OF JAPAN vol. 095, no. 008, 29.September 1995 & JP 07 117605 A (HONDA MOTOR CO LTD), 9.Mai 1995,
- PATENT ABSTRACTS OF JAPAN vol. 97, no. 3, 31.März 1997 & JP 08 310335 A (NISHIKAWA RUBBER CO LTD), 26.November 1996,

## Beschreibung

Die Erfindung betrifft die Anordnung eines aufblasbaren seitlichen Kopfschutzsystemes in einem Kraftfahrzeug, mit einem Luftsack, der mit seinen Endabschnitten an geeigneten Punkten der Fahrzeugkarosse, insbesondere an der A-Säule sowie im C-Säulen-Bereich befestigt ist, und der im nicht aufgeblasenen Zustand dem Verlauf des Dachholmes im wesentlichen zwischen A-Säule und C-Säule folgend abgedeckt ist.

Ein derartiges Kopfschutzsystem gemäß dem Oberbegriff des Anspruchs 1 ist insbesondere für einen Personenkraftwagen in der WO 94/19215 beschrieben, jedoch ist ein Serieneinsatz eines derartigen Systemes noch nicht bekannt. Insbesondere sind dem Fachmann daher auch keine Möglichkeiten bekannt, wie der Luftsack in nicht aufgeblasenem Zustand großserientauglich sowie fertigungsoptimal an der Fahrzeugkarosse angeordnet werden kann.

Die DE 41 37 691 A1 beschreibt eine Gassack-Einheit für ein Fahrzeug, mit einer Gasgeneratoraufnahme, die mit einem Gassack verbunden ist, wobei um den gefalteten Gassack und die Gasgeneratoraufnahme ein Schrumpfschlauch mit einer Sollbruchstelle aufgeschrumpft ist.

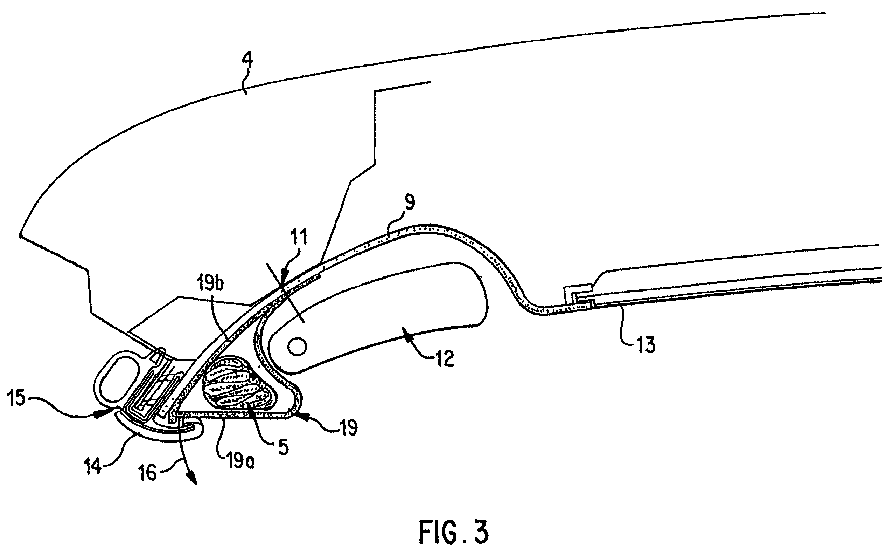

Die EP 694 444 A2 beschreibt eine Airbagvorrichtung mit einem Airbag, der entlang eines Rahmenteils im Fahrgastraum eines Kraftfahrzeugs mittels einer Klemmvorrichtung am Rahmenteil gehalten ist. An die Klemmvorrichtung (Keder) kann zur zusätzlichen Stützung der Airbagbaueinheit eine Hülle angeformt sein. Die Erstreckung des Airbags beschränkt sich entsprechend der Beschreibung auf ein Rahmenteil, an dem eine Klemmvorrichtung (Keder) angebracht werden kann. Insbesondere werden obere Türrahmenteile erwähnt, der beiden Vordertüren und/oder der beiden hinteren Türen, an denen gemäß dem allgemeinen Stand der Technik bereits Keder angebracht sind. Der Keder selbst kann auch, wie in Figur 3 gezeigt, so gestaltet sein, dass er den Airbag aus dekorativen Gründen in Richtung Fahrzeuginnenraum verdeckt.

Aufgabe der Erfindung ist es eine besonders günstige Möglichkeit zur Anordnung des Luftsackes im Bereich des Dachholmes aufzuzeigen.

Zur Lösung dieser Aufgabe sind die Merkmale des unabhängigen Patentanspruchs 1 vorgesehen, vorteilhafte Aus- und Weiterbildungen sind Inhalt der Unteransprüche.

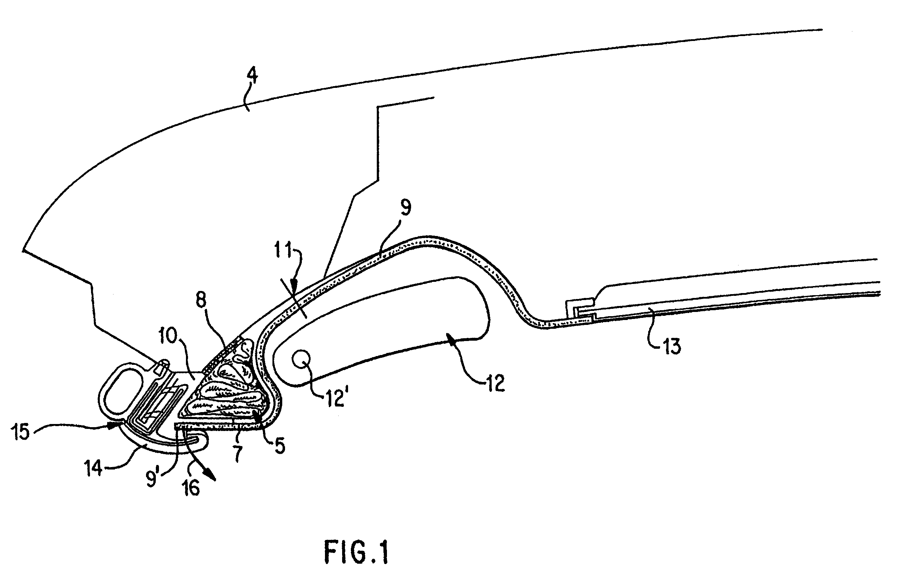

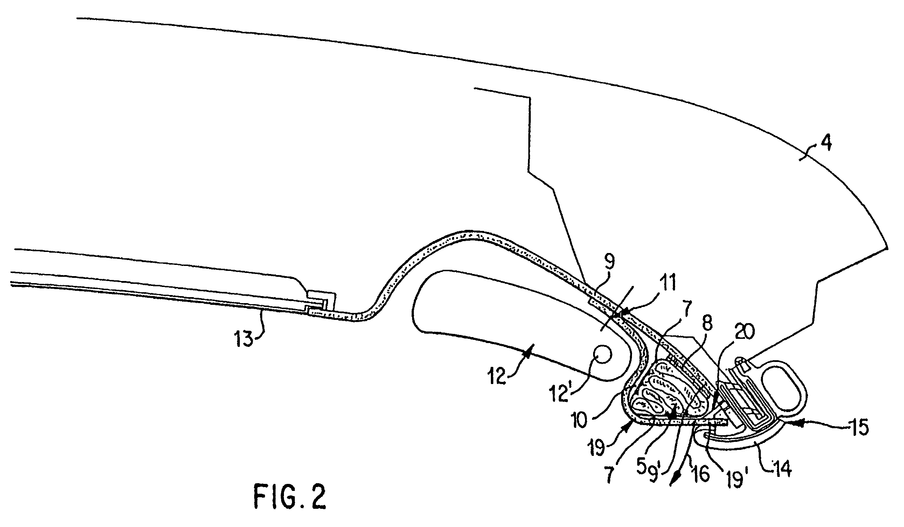

Näher erläutert wird die Erfindung anhand zweier bevorzugter Ausführungsbeispiele, die in den Figuren 1 und 2 als Teilquerschnitt durch eine Fahrzeugkarosse im

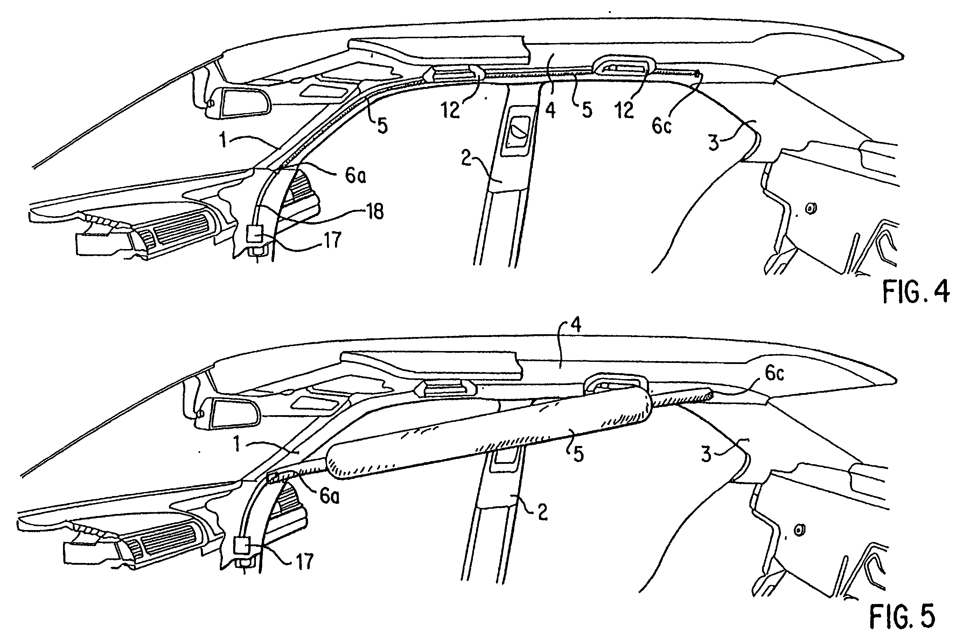

Dachholmbereich dargestellt sind, während die Figuren 4,5 eine Seitenansicht dieses Kopfschutzsystemes in nichtaktiviertem (Figur 4) sowie aktiviertem (Figur 5) Zustand zeigen.

Zunächst wird auf Figur 4 Bezug genommen. Hier erkennt man in Seitenansicht einen Fahrzeuginnenraum eines Kraftfahrzeuges bzw. Personenkraftwagens, wobei die Fahrzeugkarosse wie üblich eine A-Säule 1, eine B-Säule 2 sowie eine C-Säule 3 aufweist, und wobei neben weiteren Karosserieelementen ein an den Endbereichen der einzelnen Säulen angebundener Dachholm 4 vorgesehen ist. Dieses Kraftfahrzeug ist mit einem aufblasbaren seitlichen Kopfschutzsystem versehen, welches im wesentlichen aus einem Luftsack 5 besteht, der an geeigneten Punkten 6a, 6c der Fahrzeugkarosse, nämlich an der A-Säule 1 und im Bereich der C-Säule 3 befestigt ist. Dieser Luftsack 5 ist in Figur 5 im aufgeblasenen Zustand dargestellt, das heißt dann, wenn das seitliche Kopfschutzsystem aktiviert oder ausgelöst ist, wobei klar ersichtlicher ist, daß dieser Luftsack 5 eine dämpfende Aufprallfläche für den Kopf eines Fahrzeuginsassen bildet.

Im nichtaktivierten, das heißt im nicht aufgeblasenen Zustand ist dieser Luftsack 5 dem Verlauf des Dachholmes 4 im wesentlichen zwischen der A-Säule 1 und der C-Säule 3 folgend angeordnet, wie Figur 4 zeigt. In Figur 4 nicht gezeigt ist eine Abdeckung des Luftsackes 5 gegenüber dem Fahrzeuginnenraum, welche jedoch erforderlich ist, einerseits um den Luftsack 5 dem Verlauf des Dachholmes 4 folgend zu halten und andererseits aus stilistischen Gründen. Mögliche Ausgestaltungen für diese Abdeckung sowie für die Anordnung des Luftsackes 5 insbesondere am Dachholm 4 zeigen die folgenden erläuterten Figuren 1 bis 3. Dabei sind jeweils gleiche Bauteile mit den gleichen Bezugsziffem bezeichnet.

Beim Ausführungsbeispiel nach Figur 1 ist der Luftsack 5 in einem flexiblen Schutzschlauch 7 verpackt, welcher seinerseits direkt am Dachholm 4 befestigt ist. Diese Befestigung des Schutzschlauches 7 am Dachholm 4 erfolgt hier über ein Klettverschlußsystem 8, das heißt aus zwei bekannten Klettbändern, von denen eines am Schutzschlauch 7 und das andere am Dachholm 4 befestigt ist. Durch Andrücken des Schutzschlauches 7 mit seinem Klettband an dasjenige des Dachholmes 4 ist der Schutzschlauch mit dem Luftsack einfach am Dachholm 4 montierbar. Das Klettverschlußsystem kann sich hierbei über die gesamte Länge des Dachholmes 4 sowie auch über denjenigen Teilbereich der A-Säule 1 erstrecken, dem folgend der Luftsack 5 im nicht aufgeblasenen Zustand angeordnet ist (vergleiche Figur 4), es ist jedoch auch möglich, das Klettverschlußsystem 8 nur an einigen Stellen insbesondere des Dachholmes 4 vorzusehen.
Eine andere Möglichkeit zur Befestigung des Luftsackes 5 mit seinem Schutzschlauch 7 besteht in der Verwendung geeigneter separater Befestigungselemente. Da derartige Befestigungselemente als einfache dem Fachmann geläufige Kunststoftormteile ausgebildet sein können, ist diese Befestigungsart nicht gesondert dargestellt

Es gilt jedoch nicht nur, den Luftsack 5 am Dachholm 4 zu befestigen, sondern zusätzlich soll der Luftsack 5 zum Fahrzeuginnenraum hin abgedeckt sein. Hierzu ist die übliche Fahrzeuginnenraum-Dachverkleidung 9 in geeigneter Weise ausgebildet, das heißt diese Dachverkleidung 9 ist derart geformt, daß sie gegenüber dem Dachholm 4 einen Hohlraum 10 bildet, in welchem der Luftsack 5 mit seinem flexiblen Schutzschlauch 7 liegen kann.
Die Dachverkleidung 9 ist wie üblich mit der Fahrzeugkarosse und zwar insbesondere am Dachholm 4 verschraubt, wobei diese lediglich symbolisch dargestellte Verschraubung 11 im Bereich eines Haltegriffes 12, der im übrigen auch in den Figuren 4,5 gezeigt ist, vorgesehen ist. Wie üblich weist dabei die Dachverkleidung 9 auch eine entsprechende Mulde zur Aufnahme des um eine Achse 12'verschwenkbaren Haltegriffes 12 aus.

Die lediglich partiell dargestellte Dachverkleidung 9 weist einen Ausschnitt 13 zur Aufnahme eines üblichen Fahrzeugschiebedaches auf, jedoch ist dieser Bereich der Dachverkleidung 9 hier nicht wesentlich. Wesentlich ist vielmehr der außenliegende Endabschnitt 9' der Dachverkleidung 9, der unter eine am Dachholm 4 befestigte Randabdeckung 14 geschoben ist, die hier Bestandteil einer Türausschnittsdichtung 15 ist Die Dachverkleidung 9 ist zumindest im Bereich dieses Endabschnittes 9' dabei derart flexibel, daß bei einer Aktivierung des Kopfschutzsystemes, das heißt dann, wenn der Luftsack 5 aufgeblasen wird, dieser Endabschnitt 9' gemäß Pfeilrichtung 16 aus der Randabdeckung 14 heraus weggeschwenkt wird, so daß sich der beim Aufblasen ausdehnende Luftsack 5 aus dem Hohlraum 10 quasi herausschälen kann, um letztlich in die in Figur 5 dargestellte Position zu gelangen.

In diesem Zusammenhang sei darauf hingewiesen, daß bei einem Aufblasen des Luftsackes 5 selbstverständlich der flexible Schutzschlauch 7 aufgesprengt wird, gleiches gilt auch für die nicht gezeigten Kunststofformteile, mit Hilfe derer der Schutzschlauch 7 anstelle des Klettverschlußsystemes 8 am Dachholm 4 befestigt sein kann, weil diese Kunststofformteile ansonsten die entsprechende Ausdehnung sowie Bewegung des Luftsackes 5 blockieren würden. Ebenfalls lediglich der Vollständigkeit halber sei noch auf den in den Figuren 4,5 mit der Bezugsziffer 17 bezeichneten Gasgenerator hingewiesen, der - ausgelöst durch entsprechende Sensorsignale beispielsweise in Folge eines Seitencrashes des Kraftfahrzeuges - das Aufblasen des Luftsackes 5 initiiert. Hierzu ist der Gasgenerator 17 über einen Druckschlauch 18 mit dem Luftsack 5 verbunden.

Beim Ausführungsbeispiel nach Figur 2 ist die Dachverkleidung 9 wie in einem üblichen Personenkraftwagen ohne ein erfindungsgemäß aufblasbares seitliches Kopfschutzsystem ausgebildet. Hier ist der abermals in einem flexiblen Schutzschlauch 7 verpackte Luftsack 5 am Endabschnitt 9' dieser Dachverkleidung 9 befestigt, und zwar abermals über ein Klettverschlußsystem 8, wobei jedoch auch eine Befestigung mit geeigneten Kunststofformteilen in Frage kommt. Zur Abdeckung des Luftsackes 5 zum Fahrzeuginnenraum hin ist ein separates Verkleidungsteil 19 vorgesehen, das ebenfalls wieder derart geformt ist, daß ein Hohlraum 10 zur Aufnahme des Luftsackes 5 gebildet wird und welches gemeinsam mit der Dachverkleidung 9 und auf dieser aufliegend sowie - gegebenenfalls wieder zusammen mit dem Haltegriff 12 - über einer Verschraubung 11 am Dachholm 4 angebunden ist. Der außen liegende Endabschnitt 19' dieses Verkleidungsteiles 19 ist abermals unter eine Randabdeckung 14 - diese ist wieder Bestandteil der Türausschnittsdichtung 15 - gesteckt, wobei zusätzlich eine Verrastung 20 zwischen dem Verkleidungsteil 19 und der Dachverkleidung 9 in Form mehrerer am Verkleidungsteil 19 vorgesehener Stege, die eine entsprechende Aufnahme der Dachverkleidung 9 einsteckbar sind, vorgesehen ist. Abermals ist zumindest der außenliegende Endabschnitt 19' des Verkleidungsteiles 19 derart biegeweich ausgebildet, daß bei einem Aufblasen des Luftsackes 5 dieser Endabschnitt 19' gemaß Pfleilrichtung 16 weggeschwenkt wird, so dass sich der Luftsack 5 aus dem Hohlraum 10 herausschälen kann, um letztlich in die in Figur 5 gezeigte Position zu gelangen.

Das Ausführungsbeispiel nach Figur 3 dient zum leichteren Verständnis der Erfindung. Es besitzt kein Klettverschlusssystem. Hier ist die Dachverkleidung 9 wie bei einem Personenkraftwagen ohne erfindungsgemäßes Kopfschutzsystem üblich ausgebildet. Es ist für den Luftsack 5 abermals ein separates Verkleidungsteil 9 vorgesehen, welches jedoch gehäuseartig ausgebildet ist und hierbei diesen Luftsack 5 aufnimmt. Dieses gehäuseartige Verkleidungsteil 19 besitzt somit zwei bereichsweise voneinander beabstandete Wände 19a, 19b, zwischen denen sich der Hohlraum 10 zur Aufnahme des Luftsackes 5 befindet. Dieses gehäuseartige, quasi röhrenförmige Verkleidungsteil 19 bildet somit zusammen mit dem Luftsack 5, der abermals in einem flexiblen Schutzschlauch verpackt sein kann, eine Vormontageeinheit, das heißt dieses Verkleidungsteil 19 nach Figur 3 kann zusammen mit dem Luftsack 5 an einer anderen Stelle im Produktionsprozess vormontiert werden, um schließlich als komplette Einheit in der Fahrzeugkarosse untergebracht zu werden. Die Befestigung an der Fahrzeugkarosse kann dabei analog den vorangegangenen Ausführungsbeispielen über eine Verschraubung 11 zusammen mit der Dachverkleidung 9 sowie auf dieser aufliegend am Dachholm 4 erfolgen. Eine separate Befestigung des Luftsackes 5 bzw. des flexiblen Schutzschlauches innerhalb des gehäuseartigen Verkleidungsteiles 19 ist hier nicht erforderlich. Selbstverständlich sollte auch bei diesem Ausführungsbeispiel nach Figur 3 die dem Fahrzeuginnenraum zugewandte Wand 19a des Verkleidungsteiles 19 derart flexibel ausgebildet sein, daß bei einem Aufblasen des Luftsackes 5 diese Wand mit ihrem in die Wand 19b eingesteckten Endabschnitt gemäß Pfeilrichtung 16 weggeschwenkt werden kann, um es dem Luftsack 5 zu ermöglichen, sich aus dem Hohlraum 10 herauszuschälen und letztlich in die in Figur 5 dargestellte Position zu gelangen.

Wenngleich in den Figuren 1 - 3 jeweils nur die Anordnung des Luftsackes 5 am bzw. im Bereich des Dachholmes 4 dargestellt ist, ist die gleiche Gestaltung ebenfalls in demjenigen Teilbereich der A-Säule 1 möglich, in welchem - wie Figur 4 zeigt - der Luftsack 5 dem Verlauf der A-Säule 1 folgend vorgesehen ist. Hier kann somit der Luftsack 5 in nicht aufgeblasenem Zustand dem oberen Teilbereich der A-Säule 1 folgend ebenfalls vom Verkleidungsteil 19 oder einer weiteren separaten Verkleidung abgedeckt sein. Allen Ausführungsbeispielen ist dabei gemein, daß der Luftsack 5 geschützt, nämlich durch den Schutzschlauch 7 bzw. durch das gehäuseartige Verkleidungsteil 19 auf einfache und kostengünstige Weise montiert werden kann und dabei im nicht aufgeblasenen Zustand sicher am Dachholm 4 bzw. am oberen Teilbereich der A-Säule 1 gehalten wird. Die Unterbringung ist äußerst platzsparend und erlaubt weiterhin einen guten Toleranzausgleich. Der zusätzliche Entwicklungsaufwand ist gering, die Reparaturfreundlichkeit hoch. Dabei können selbstverständlich eine Vielzahl von Details insbesondere konstruktiver Art durchaus abweichend von den gezeigten Ausführungsbeispielen gestaltet sein, ohne den Inhalt der Patentansprüche zu verlassen.

## Patentansprüche

1. Anordnung eines aufblasbaren seitlichen Kopfschutzsystemes in einem Kraftfahrzeug, mit einer Fahrzeuginnenraum-Dachverkleidung (9) und mit einem Dachholm (4), einer A-Säule (1) und einer C-Säule (3) einer Fahrzeugkarosse, umfassend einen Luftsack (5), der mit seinen Endabschnitten an der A-Säule (1) sowie im C-Säulen-Bereich befestigt ist, und der im nicht aufgeblasenen Zustand dem Verlauf des Dachholmes (4) im wesentlichen zwischen A-Säule (1) und C-Säule (3) folgend, am Dachholm (4) oder an der Fahrzeuginnenraum-Dachverkleidung (9) befestigt ist und der von der Fahrzeuginnenraum-Dachverkleidung (9) oder von einem separaten Verkleidungsteil (19) abgedeckt ist, **dadurch gekennzeichnet, dass** der Luftsack (5) in einem flexiblen Schutzschlauch (7) verpackt ist und mit diesem über ein Klettverschlusssystem (8) am Dachholm (4) oder an der Fahrzeuginnenraum-Dachverkleidung (9) befestigt ist.

2. Anordnung eines Kopfschutzsystemes nach Anspruch 1, **dadurch gekennzeichnet, dass** das separate Verkleidungsteil (19) den Luftsack (5) mindestens teilweise gehäuseartig, eine Vormontageeinheit bildend, umgibt.

3. Anordnung eines Kopfschutzsystemes nach einem der voran gegangenen Ansprüche, **dadurch gekennzeichnet, dass** der Luftsack (5) im nicht aufgeblasenen Zustand dem oberen Teilbereich der A-Säule (1) folgend ebenfalls vom Verkleidungsteil (19) oder von einer separaten Verkleidung abgedeckt ist.

4. Anordnung eines Kopfschutzsystemes nach einem der voran gegangenen Ansprüche, **dadurch gekennzeichnet, dass** das Verkleidungsteil (19) und/oder die Fahrzeuginnenraum-Dachverkleidung (9) an der Fahrzeug-Karosse insbesondere zusammen mit einem Haltegriff (12) verschraubt ist.

## Claims

1. An arrangement of an inflatable lateral head protection system in a motor vehicle, comprising a roof covering (9) over the interior of the vehicle, a longitudinal roof member (4), an A-column (1) and a C-column (3) of a vehicle body, the arrangement comprising an airbag (5) fastened at its end portions to the A-column (1) and in the neighbourhood of the C-column and, when in the non-inflated state, following the curve of the roof member (4) substantially between the A-column (1) and the C-column (3), fastened to the roof member (4) or to the internal roof covering (9) and concealed by the internal roof covering (9) or a separate covering part (19), **characterised in that** the airbag (5) is packed in a flexible protective tube (7) and the bag (5) and tube (7) are fastened by a hook and loop fastener system (8) to the roof member (4) or to the internal roof covering (9).

2. An arrangement of a head protection system according to claim 1, **characterised in that** the separate covering part (19) at least partly surrounds the airbag (5) and forms a pre-assembled unit.

3. An arrangement of a head protection system according to any of the preceding claims, **characterised in that** the airbag (5) in the non-inflated state is likewise covered by the covering part (19) or by a separate covering along the upper partial region of the A-column (1).

4. An arrangement of a head protection system according to any of the preceding claims, **characterised in that** the covering part (19) and/or the internal roof covering (9) is screwed to the vehicle body, especially together with a handle grip (12).

## Revendications

1. Installation d'un système latéral gonflable de protection de la tête dans un véhicule automobile comprenant un habillage de toit (9) à l'intérieur de l'habitacle et un longeron de toit (4), une colonne A (1) et une colonne C (3) faisant partie de la carrosserie du véhicule, une poche gonflable (5) fixée par ses segments d'extrémité à la colonne A (1) et dans la zone de la colonne C et qui, à l'état non gonflé suit pratiquement le tracé du longeron de toit (4) entre la colonne A (1) et la colonne C (3), en étant fixée au longeron de toit (4) ou à l'habillage de toit (9) de l'habitacle du véhicule et qui est recouverte par l'habillage de toit (9) à l'intérieur de l'habitacle ou par une pièce d'habillage (19) distincte,
**caractérisée en ce que**
la poche gonflable (5) est emballée dans une gaine protectrice souple (7) et est fixée avec celle-ci par un système d'accrochage à micro griffes (8) au longeron de toit (4) ou à l'habillage de toit (9) à l'intérieur de l'habitacle.

2. Installation d'un système de protection de tête selon la revendication 1,
**caractérisée en ce que**
la pièce d'habillage séparée (19) entoure au moins en partie la poche gonflable (5) à la manière d'un boîtier en formant un ensemble pré-assemblé.

3. Installation d'un système de protection de tête selon l'une quelconque des revendications précédentes,
**caractérisée en ce que**
la poche gonflable (5) à l'état non gonflé, est couverte en suivant la zone partielle supérieure de la colonne A (1), également par la pièce d'habillage (19) ou par une autre pièce d'habillage séparée.

4. Installation d'un système de protection de tête selon l'une quelconque des revendications précédentes,
**caractérisée en ce que**
la pièce d'habillage (19) et/ou l'habillage de toit (9) à l'intérieur de l'habitable est vissée à la carrosserie du véhicule notamment avec une poignée (12).
